# EUROPEAN PATENT SPECIFICATION

(11) **EP 4 002 166 B1**
(45) Date of publication and mention of the grant of the patent: **12.06.2024**
(21) Application number: 20206936.5
(22) Date of filing: 11.11.2020
(51) Int. Cl.: G06F 21/32, G06F 21/35

(54) **METHOD AND SYSTEM FOR BIOMETRIC AUTHENTICATION FOR LARGE NUMBERS OF ENROLLED PERSONS**
VERFAHREN UND SYSTEM ZUR BIOMETRISCHEN AUTHENTIFIZIERUNG FÜR EINE GROSSE ANZAHL VON EINGESCHRIEBENEN PERSONEN
PROCÉDÉ ET SYSTÈME D'AUTHENTIFICATION BIOMÉTRIQUE POUR UN GRAND NOMBRE DE PERSONNES INSCRITES

(43) Date of publication of application: 25.05.2022
(73) Proprietor: Qamcom Innovation Labs AB, 41285 Gothenburg (SE)
(72) Inventor: Herp, Arnold, 91096 Moehrendorf (DE); Bergqvist, Johan, 6340 Baar (CH)
(74) Representative: Prins Intellectual Property AG

(56) References cited:
- WO-A1-2013/051019
- WO-A1-2020/207945
- US-A1- 2006 177 106
- US-A1- 2015 043 792
- US-A1- 2016 379 211

## Description

### Technical Field

The present disclosure relates to a method and system for biometric authentication for large numbers of enrolled persons.

### Prior Art

Authentication of persons, for the verification of a person's identity, is required in various applications such as access control to restricted areas, payment control for the payment of purchased goods, etc. Authentication of a person may include something only the person knows (a PIN: Personal Identification Number, a password, etc.), something only the person possesses (a key, a smartcard, etc.), and/or biometric features of the person (fingerprint features, face features, etc.).

Third parties may become aware of a PIN, a password, etc. Furthermore, third parties may take over possession of a key, a smartcard, etc. Accordingly, for the purpose of strong authentication of a person, authentication schemes may include biometric features of persons, such as fingerprint features, face features, etc.

Authentication of a person may be based on the comparison of currently recorded features of the person with prestored biometric features of enrolled persons. With increasing number of persons, authentication becomes more and more difficult. For example, at a smartphone it may only be necessary to compare currently recorded biometric features with biometric features of a single enrolled person, such fingerprint features, face features, etc. of the owner of the smartphone. In another example, at an access control system of a factory it may only be necessary to compare currently recorded biometric features of a person with biometric features of some hundred or thousand enrolled employees of the factory. However, at a payment system in a store or at an access control system of public services such as public transportation, stadiums, theatres, etc. it may be necessary to compare currently recorded features of a person with prestored biometric features of some ten thousands, hundred thousands or more than millions of enrolled persons.

Thus, with increasing number of enrolled persons and while considering system costs, response time, etc., reliable authentication of a person based on biometric features of the person in accordance with a predefined security level is becoming increasingly difficult.

Consequently, in practice biometric features are often not used for primary authentication, but only after verification of something the user possesses, such as a key, a chipcard, etc., which uniquely identifies the person and enables that currently recorded biometric features have to be compared only with that person's prestored biometric features, instead of with prestored biometric features of thousands or millions of enrolled persons. Prominent representatives are state-issued identity cards or passports which include fingerprint features, face features, etc. of the person digitally stored on a chip, wherein only state authorities have access to the digitally stored biometric features stored on the chip for the purpose of authentication of the person. In another approach in 2017, PIN entry as confirmation of payment approval was replaced by integrating a fingerprint sensor into a chipcard. However, this technology has not yet become generally accepted and it can therefore be assumed that the acceptance was insufficient because of technical and/or user experience reasons.

A high level of user acceptance may be achieved if, in e.g. over 99% of all cases, reliable authentication of a person based on biometric features would be enabled by, for example, placing a hand over a sensor, wherein only in special conditions further action by the person would be necessary, and wherein the further action would be as convenient as possible.

As recording of biometric features is never subject to identical conditions (e.g. different sensors, different environmental conditions such as temperature, humidity, illumination, etc.), recorded biometric features differ each time. In a worst case, currently recorded biometric features of a first person may be detected as being the prestored biometric features of an enrolled second person. Accordingly, determining a threshold which enables a predefined security level, and which does not reject too many authentication attempts, is challenging. The False Acceptance Rate (FAR, namely the likelihood of authenticating a wrong person as a correct person) and the False Rejection Rate (FRR, namely the likelihood of incorrectly rejecting a correct person) are interdependent. Lowering FAR for highest security levels will increase the FRR, with the result of less convenience, and vice versa, with the result of a lowered security level.

For minimizing FAR and FRR, an important objective of any authentication scheme based on biometric features is therefore to record as many characteristic features as possible which can be optimally distinguished from each other. Different approaches to achieve this are described for example, in "Feature Extraction Methods for Palmprint Recognition: A Survey and Evaluation", published in IEEE Transactions on systems. Man, and cybernetics: Systems, Vol. 40, No 2, February 2019. Similar approaches can be used for Palm vein Recognition or 3D characteristics of a hand. However, increasing the number of characteristic biometric features may decrease convenience (for example in case several postures of a hand are required for recording biometric features not only of the palm, but additionally of the back of the hand), and may increase system costs and/or response time.

Another approach to lower the probability to incorrectly accept a person is to increase the number of so-called affine regions to be used for matching. E.g. two photographs containing biometric features are then identified as affine, if they capture the same body (part) and thus have the same origin. Example: The impression made by a right thumb at system A is affine to the impression made by the right thumb at system B, but both impressions are not affine to that of a left thumb.

US8229178B2 discloses personal identification which includes switching between visible and near infrared light, acquiring palmprint image and palm vein image from a person under the visible and the near infrared light, extracting sub-images from the palmprint image and the palm vein image based on a region of interest, extracting multiple features from the sub-images, and matching the extracted multiple features with stored information in a database to authenticate the person.

WO2020207947 discloses a biometrics imaging device for capturing image data of a body part of a person which comprises at least one of a visible light sensor and a near infrared light sensor. The biometrics imaging device comprises a time of flight camera configured for capturing three-dimensional image data of the body part. The biometrics imaging device is configured to execute an imaging procedure which includes the steps of: capturing three dimensional image data of a current body part posture; determining on the basis of the three dimensional image data a difference between a desired body part posture and the current body part posture; providing on the basis of the determined difference user guidance to the person enabling the person to adapt the body part posture in direction of the desired posture; and capturing at least one of image data in the visible light spectrum and image data in the infrared light spectrum.

WO2020207945 discloses a biometrics authentication device for authenticating a person by comparing biometric features of a body part of the person with pre-stored biometric features of body parts of a plurality of registered persons being configured to: capture image data of the body part of the person; determine from the captured image data at least one characteristic geometric body part property of the body part of the person and biometric features of the body part of the person; limit comparison of the biometric features of the body part of the person to pre-stored biometric features of body parts of the plurality of registered persons which have a predefined similarity level with the at least one characteristic geometric body part property of the person.

US2006177106 discloses a method of indexing a first database of records. A fingerprint is received, and a biometric identification number is determined based thereon. A database is formed and is indexed based on the biometric identification number. As such, absent knowledge of the actual index value, the index is reconstructable based on a provided fingerprint data.

US2015043792 discloses a biometric authentication device including: a memory; and a processor coupled to the memory and configured to: determine, when authentication with first biometric information has been successful, whether second biometric information different from the first biometric information is from a user corresponding to the first biometric information using a determining method corresponding to one of a plurality of security levels, the determining method being selected from among a plurality of determining methods based on the one of the plurality of security levels, and register, when the second biometric information has been determined to be from the user, the second biometric information associated with the user.

Bringing FAR below a desired security level has the effect that at the same time the FRR is increased, which may result in inconvenience and therefore reduced user acceptance, in particular in case of a very large number of participants.

### Summary of the Invention

It is an objective of the invention to provide a method and system for enabling biometric authentication of large numbers of enrolled persons which do not have at least some of the disadvantages of the prior art. In particular, it is an objective of the invention to provide a method and system for enabling biometric authentication of large number of enrolled persons meeting at the same time a predefined security level and providing a convenient solution in case of false rejections of persons.

At least one objective of the invention is achieved by the method and the system defined in the enclosed independent claims. The dependent claims set forth further embodiments of the invention.

At least one objective of the invention is achieved by a method comprising: at a biometric sensor, recording current biometric features of a person, at a matching server, comparing currently recorded biometric features of the person with prestored biometric features of enrolled persons while applying one or more identifying acceptance tolerances, and signalling positive authentication in case of a match, at a user device of the person, in case of no positive authentication at the matching server, sending an anonymous identifier of the person via a communication link between the user device and the respective biometric sensor to the matching server for the purpose of enabling selecting prestored biometric features of the person; at the matching server, selecting prestored biometric features of the person and comparing the currently recorded biometric features of the person with selected prestored biometric features of the person while applying a verifying acceptance tolerance, and signalling positive authentication in case of successful verification. The identifying acceptance tolerances can be set to meet a desired security level while considering response time and system complexity for performing the comparison for very large numbers of enrolled persons. The verifying tolerance can be set to meet a desired security level while response time and system complexity does not have to be considered because comparison involves only the prestored biometric features of the person. During enrolment, an anonymous identifier is assigned to each person, and the anonymous identifier is stored in the matching server, the user device, and/or in an application server for the purpose of enabling sending the anonymous identifier from the user device to the respective biometric sensor and of selecting the prestored biometric features of the person.

In an embodiment, the method further comprises: at the user device, receiving an anonymous identifier of the person from an application server for the purpose of enabling selecting prestored biometric features of the person at the matching server. The anonymous identifier can be sent to the user device from an application server and used on the matching server (possibly in cooperation with the application server) for enabling selecting prestored biometric features of the person.

In an embodiment, the method further comprises: at the user device, transmitting an anonymous identifier of the person from the user device to the respective biometric sensor by displaying at the user device a visual code, in particular a QR code, on a display of the user device, and by reading the visual code at the respective biometric sensor, or by transmitting the anonymous identifier via a NFC link between the user device and the respective biometric sensor. A visual code is particularly practical in case the biometric sensor includes an imaging sensor for capturing images in the visible light spectrum, for example for capturing the palm print of a hand, and in case the user device includes a display for displaying information, such as a display of a smartphone.

In an embodiment, the method further comprises: at the user device, receiving and transmitting an anonymous identifier in encrypted form for the purpose of enabling selecting prestored biometric features of the person at the matching server.

In an embodiment, the method further comprises: limiting the biometric sensor for recording biometric features of one or two hands of the person, and in particular using an image sensor with band-pass filters in the 470±25nm and 850±25nm areas; an LED illumination unit with independently controllable illumination duration for the 470±25nm and 850±25nm areas; a time of flight sensor with a minimum QVGA voxel resolution or higher (QVGA: Quarter Video Graphics Array). A voxel defines an element in a three-dimensional space, similar to a pixel in a two dimensional plane.

In an embodiment, the method further comprises: at a biometric sensor, detecting whether a body part of the person or the user device of the person is approaching, and selecting reading biometric features of the body part of the person respectively reading a visual code displayed on a display of the user device, or enabling a NFC link between the user device and the biometric sensor. For example, the biometric sensor may include a three-dimensional imaging device for detecting and classifying objects in visible distance.

In an embodiment, the method further comprises: at one or more of the biometric sensor, the matching server, and the user device, enabling encryption of data communications.

In an embodiment, the method further comprises: enabling contactless communication between the biometric sensor and the user device. Thus, persons can be authenticated without having to contact with a device belonging to the person.

In an embodiment, the method further comprises: at the matching server, performing authentication of the person at a parametrizable security level in the form of a multi-stage process in cooperation with the respective biometric sensor and the user device. For example, the security level can be adapted to a lower level in case of a larger number of enrolled persons, while the security level can be adapted to a higher level in case of a smaller number of enrolled persons.

In an embodiment, the method further comprises: at the matching server, applying a first acceptance tolerances relating to biometric features of a first body part of the person, and applying a second acceptance tolerance relating to biometric features of the first body part and a second body part of the person.

In an embodiment, the method further comprises: initiating recording of current biometric features at a biometric sensor upon approach of the person to the biometric sensor, or initiating recording of current biometric features at an application server upon receipt of respective information.

In an embodiment, the method further comprises: limiting the matching server to the purpose of authentication, and limiting an application server to the purpose of one or more of payment control, and access control. For example, in accordance with General Data Protection Regulations (GDPR).

The invention further relates to a system comprising: one or more biometric sensors for recording current biometric features of a person, a matching server for comparing currently recorded biometric features of the person with prestored biometric features of enrolled persons while applying one or more identifying acceptance tolerances, and signalling positive authentication in case of a match, a user device of the person adapted to, in case of no positive authentication, send an anonymous identifier of the person via a communication link between the user device and the respective biometric sensor to the matching server for the purpose of selecting prestored biometric features of the person,
the matching server is further adapted to select prestored biometric features of the person, compare the currently recorded biometric features of the person with selected prestored biometric features of the person while applying a verifying acceptance tolerance, and signal positive authentication in case of successful verification.

In an embodiment, the system further comprises: an application server for enabling application functions, in particular for enabling one or more of payment control, and access control.

### Brief Explanation of the Figures

The invention is described in greater detail below with reference to embodiments that are illustrated in the figures. The figures show:
- Fig. 1: illustrates schematically illustrates schematically the error rate of the false acceptance rate (FAR) and the false rejection rate (FRR) of biometric features as a function of an acceptance tolerance;
- Fig. 2: illustrates schematically the FAR and the FRR in comparison with an improved FAR' and an improved FRR';
- Fig. 3: illustrates schematically an example of requesting authentication which is initialized by an application server, wherein the application server has the form of a payment server;
- Fig. 4: illustrates schematically an example of requesting authentication which is event triggered by a person, wherein the application server has the form of an access management server
- Fig. 5: illustrates schematically possible steps of a method in accordance with the present invention.

### Embodiments of the Invention

For determining if currently recorded biometric features are from a known person, the currently recorded biometric features are compared with prestored biometric features of enrolled persons. If the currently recorded biometric features match the prestored biometric features of a particular enrolled person, the current person may be accepted as being authenticated or known, or the respective person may be rejected as not being authenticated or unknown if no such match exists. In some embodiments, biometric features may relate to biometric features of a hand of a person, such as palm print features, vein features, biometric features of the back of the hand, etc., in particular of the left and/or the right hand.

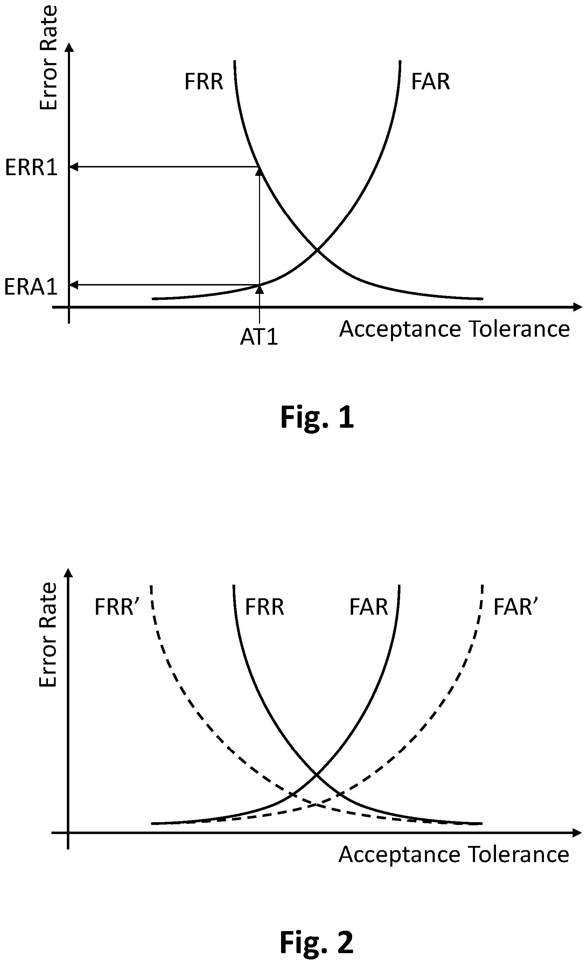

Figure 1 illustrates schematically the error rate of the false acceptance rate (FAR) and the false rejection rate (FRR) of biometric features as a function of an acceptance tolerance. The acceptance tolerance increases from left to right. The acceptance tolerance relates to a threshold of a distance measurement, such as a metric distance, a hamming distance, etc., between currently recorded biometric features and prestored biometric features. A small acceptance tolerance corresponds to the case where the distance between the biometric features is below a small threshold, and a large low acceptance tolerance corresponds to the case where the distance between the biometric features is below a large threshold.

As illustrated in Figure 1, the FAR is high if the acceptance tolerance is large, and the FAR is low if the acceptance tolerance is small. In other words, for a small acceptance tolerance the number of false acceptances is low, wherein for a large acceptance tolerance the number of false acceptances is high.

As illustrated in Figure 1, the FRR is low if the acceptance tolerance is large, and the FRR is high if the acceptance tolerance is small. In other words, for a small acceptance tolerance the number of false rejections is high, wherein for a large acceptance tolerance the number of false rejections is low.

It is clear, that a small acceptance tolerance has the result of a low number of false acceptances respectively of a low FAR, and a large acceptance tolerance has the result of a high number of false acceptances respectively in a high FAR. Furthermore, a small acceptance tolerance has the result of a high number of false rejections respectively of a high FRR, and a large acceptance tolerance has the result of a low number of false rejections respectively of a low FRR. Thus, for a low FAR the FRR is high, and for a low FRR the FAR is high. Accordingly, FAR and FRR are interdependent.

As illustrated in Figure 1, setting the acceptance tolerance to a first acceptance tolerance AT1 for the comparison of currently recorded and prestored biometric features results in a first false acceptance rate ERA1 and in a first rejection rate ERR1. Thus, setting the acceptance tolerance to a specific value has the result that at the same time both the FAR and the FRR have specific values.

Figure 2 illustrates schematically the FAR and the FRR in comparison with an improved FAR' and an improved FRR'. The improved FAR' and the improved FRR' result from increasing the number of characteristic biometric features and/or from increasing the affine regions. The improved FAR' and the improved FRR' are flatter and the probability of false positive and false negative decisions is reduced.

Irrespective of improvements, it is in practice not possible to bring FAR below a threshold that meets the safety requirements (nearly zero) for very large numbers of persons.

According to the invention, a system for biometric authentication includes the following system components:
a. one or more biometric sensors b1, b2, ..., bn each including image sensors for recording 3D images, visual images (VIS) and/or near-infrared images (NIR) of biometric features a person P, such as of the hand, requesting authentication, and for determining currently recorded biometric features from currently recorded 3D images, visual images (VIS) and/or near-infrared images (NIR) of the person P;
   In addition, the biometric sensors b1, b2, ..., bn are configured for receiving digital information from a user device S of the person P, such as a smartphone, wherein digital information is received by the biometric sensors b1, b2, ..., bn for example via capturing images of visual codes, such as QR codes, displayed on a display of the user device S, via a NFC link (NFC: near field communication) to the user device S, etc.;
b. a matching server MS having stored prestored biometric features of enrolled persons, and configured for comparing recorded biometric features with prestored biometric features while applying an acceptance tolerance AT;
c. an application server PS, AMS for managing use case specific requirements such as access control, payments, etc.;
d. a user device S, such as a smartphone, of the person P requesting authentication.

In some embodiments, the biometric sensor includes at least one of a visible light sensor for capturing image data of a body part of a person in the visible light spectrum and a near infrared light sensor for capturing image data of the body part in the near infrared light spectrum. In some embodiments, the biometrics imaging device comprises a time of flight camera configured for capturing three-dimensional image data of the body part of the person. In some embodiments, the biometric features are determined from images captured in the visible light spectrum, from images captured in the near infrared light spectrum, and/or from three-dimensional images. In some embodiments, the biometric sensor is configured for capturing images from a hand of a person, in particular from a palm print, from a vein pattern and/or from a three-dimensional geometry of the hand.

Communication between the components of the biometric authentication system is enabled via wired or wireless communication links, such as cable links, WiFi, 3G, 4G, 5G, etc. In some embodiments, communication is encrypted and secured. In some embodiments, the person P authenticates herself at the user device S via a PIN, fingerprint, face recognition, etc. In some embodiments, the user device S includes a communication interface for communicating via a telecommunications network based for example on a SIM card (SIM: subscriber identification module).

At the matching server MS, the prestored biometric features of enrolled person are based on an enrolment of persons, wherein for respective prestored biometric features the corresponding person was enrolled in two steps as follows.

In a first step, in cooperation with the application server MS, AMS, the user device S, such as an app provided by the application server MS, AMS and installed on the person's P smartphone, controls an interface, such as a graphical user interface, of the user device S and receives personal data, such as the name, address, etc., of the person P. The application server MS, AMS generates a unique identifier APPL_ID and assigns the unique identifier APPL_ID to the personal data of the person P. In some embodiments, the user device S is configured for enabling compliance with General Data Protection Regulation (GDPR), for example for deleting data, repeating enrolment, setting rules, etc.

In a second step, which takes place at a trusted location under supervision of a trusted person and in cooperation with the application server MS, AMS, the trusted person verifies the unique identifier APPL_ID, for example by scanning a respective visual code, such as a QR-Code, displayed on a display of the user device S of the person P, by verifying the personal data of the person and by verifying the identity of the person P. For example, the identity of the person P is verified based on an identity card, a passport, etc. The trusted person supervises that the person P records her biometric features using a biometric sensor (as described above) installed at the trusted location, wherein a unique anonymous identifier PF_ID is assigned to the unique identifier APPL_ID. The application server MS, AMS stores and manages the link between the unique identifier APPL_ID and the unique anonymous identifier PF_ID.

The system for biometric authentication supports the following application use cases:
i. request for authentication is initialized by the application server;
ii. request for authentication is event triggered by a person.

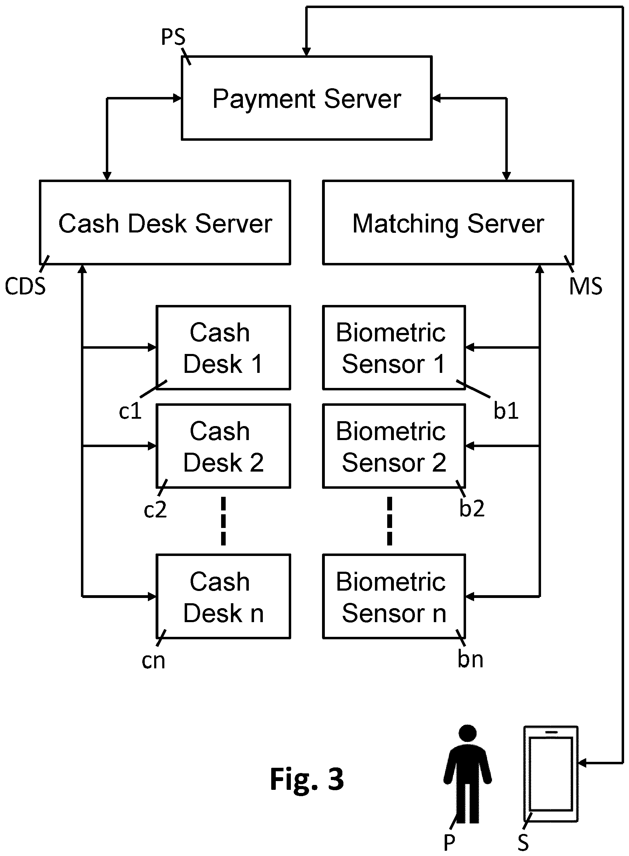

Figure 3 illustrates schematically an example of requesting authentication which is initialized by the application server, wherein the application server has the form of a payment server.

As illustrated in Figure 3, a cash desk server CDS is connected with cash desks c1, c2, ..., cn which are installed at Point of Sales (POS). The cash desk server CDS is further connected to a payment server PS.

The cash desk server CDS receives from one of the cash desks c1, c2, ..., cn a payment request for payment of goods a person P wants to buy and sends the payment request to the payment server PS.

At each cash desk c1, c2, ..., cn, a biometric sensor b1, b2, ..., bn is installed, wherein at payment server PS, each cash desk c1, c2, ..., cn is logically linked to the respective biometric sensors b1, b2, ..., bn, wherein an identifier RT _I D of a respective biometric sensor b1, b2, ..., bn is linked with an identifier of the corresponding cash desk c1, c2, ..., cn.

The payment server PS is connected to a matching server MS. Upon receipt of the payment request, the payment server PS sends an authentication request together with the identifier RT_ID of the respective biometric sensor b1, b2, ..., bn to the matching server MS.

The matching server MS requests receiving currently recorded biometric features of the person P at the respective biometric sensor b1, b2, ..., bn. While applying a predefined acceptance tolerance AT, the matching server MS compares the currently recorded biometric features with prestored biometric features.

In case of positive authentication, the matching server MS sends the unique anonymous identifier PF_I D of the respective person P and the identifier RT_ID of the respective biometric sensor b1, b2, ..., bn to the payment server PS.

In case of negative authentication, the matching server MS sends the identifier RT_ID of the respective biometric sensor b1, b2, ..., bn together with a reject message to the payment server PS.

In case of positive authentication, the payment server PS completes the payment and sends a payment confirmation to the cash desk server CDS for further delivery to the respective cash desk c1, c2, ..., cn.

In case of negative authentication, the person P requesting authentication operates a user device S of the person P for enabling selecting prestored biometric features of the person P at the matching server MS for comparison with the currently recorded biometric features, as will be described in more detail below.

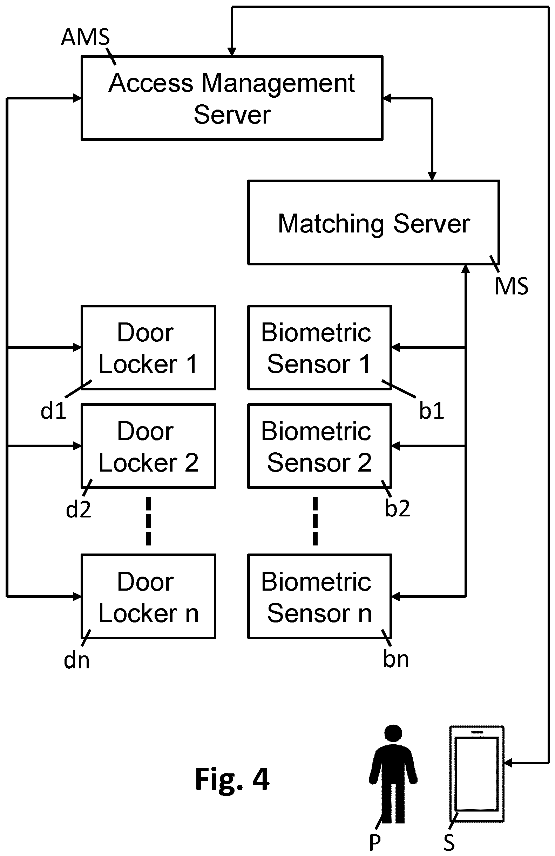

Figure 4 illustrates schematically an example of requesting authentication which is event triggered by a person, wherein the application server has the form of an access management server.

As illustrated in Figure 4, an access management server AMS is connected with door lockers d1, d2, ..., dn installed at respective doors for controlling access to restricted access.

At each door locker d1, d2, ..., dn, a biometric sensor b1, b2, ..., bn is installed, wherein at access management server AMS, each door locker d1, d2, ..., dn is logically linked to the respective biometric sensors b1, b2, ..., bn, wherein an identifier RT _I D of a respective biometric sensor b1, b2, ..., bn is linked with an identifier of the corresponding door locker d1, d2, ..., dn.

A person requesting access to a restricted area initiates recording of her biometric features at the respective biometric sensor b1, b2, ..., bn, wherein currently recorded biometric features are sent to the matching server MS. While applying a predefined acceptance tolerance AT, the matching server MS compares the currently recorded biometric features with prestored biometric features.

In case of positive authentication, the matching server MS sends the unique anonymous identifier PF _I D of the respective person P and the identifier RT _I D of the respective biometric sensor b1, b2, ..., bn to the payment server PS.

In case of negative authentication, the matching server MS sends the identifier RT_ID of the respective biometric sensor b1, b2, ..., bn together with a reject message to the access management server AMS.

In case of positive authentication, the access management server AMS controls the respective door locker d1, d2, ..., dn for enabling access by the person P, while applying additional rules, if applicable.

In case of negative authentication, the person P requesting authentication operates a user device S of the person P for enabling selecting prestored biometric features of the person P at the matching server MS for comparison with the currently recorded biometric features, as will be described in more detail below.

The matching server MS is configured for applying an adjustable acceptance tolerance when comparing currently recorded biometric features with prestored biometric features.

For example, the acceptance tolerance can be adjusted to an identifying acceptance tolerance AT_ident_one if comparison of biometric features relates to currently recorded biometric features of one hand of the person P and to respective prestored biometric features of all enrolled persons, thereby identifying if the person P is one of the enrolled persons.

For example, the acceptance tolerance can be adjusted to an identifying acceptance tolerance AT_ident_two if comparison of biometric features relates to currently recorded biometric features of two hands of the person P and to respective prestored biometric features of all enrolled persons, thereby identifying if the person P is one of the enrolled persons.

For example, the acceptance tolerance can be adjusted to a verifying acceptance tolerance AT_ver if comparison of biometric features relates to verification if currently recorded biometric features match a specific set of prestored biometric features of a single person, thereby verifying if the person is a specific person of the enrolled persons.

The acceptance tolerance AT_ident_one can relate to biometric features of one hand of the person P, and the acceptance tolerance AT_ident two can relate to biometric features of two different hands of the person P. The acceptance tolerance AT_ident_two involving two different hands of the person can be far larger than the acceptance tolerance AT_ident_one involving only one hand of the person, because comparing two hands of the same person relates to two independent events, so that the overall probability of correct authentication is significantly increased by multiplying the individual probabilities.

As mentioned earlier, the acceptance tolerances AT_ident_one, AT_ident two, AT_ver relate to a distance measurement, such as a metric distance, a Hamming distance, etc.

The acceptance tolerances AT_ident_one, AT_ident two, AT_ver can be adjusted in accordance with the number of enrolled persons and in accordance with a required security level. A small acceptance tolerance is computationally more demanding than a large acceptance tolerance. Thus, if the number of enrolled persons is large, the acceptance tolerance can be increased for the purpose of an improved response time, decreased system costs, etc., while decreasing the security level at the same time.

In case of positive authentication, namely in case the comparison of biometric features is withing a selected acceptance tolerance AT_ident_one, AT_ident two, AT_ver, the matching server MS is configured to send the respective anonymous identifier PF _ID of the person and the identifier RT _I D of the respective biometric sensor b1, b2, ..., bn to the application server PS, AMS.

The matching server MS is configured for adjusting the acceptance tolerance to AT_ident_one, and for adjusting the acceptance tolerance to AT_ident_two in case of negative authentication, and for adjusting the acceptance tolerance to AT_ver in case of still negative authentication.

In accordance to predefined rules, such as in case a payment exceeds a predefined limit, the matching server MS is configured for adjusting the acceptance tolerance AT_ver without prior adjustment to acceptance tolerances AT_ident_one, AT_ident_two.

The acceptance tolerance AT_ver is independent from the number of enrolled persons and relates to the verification if currently recorded biometric features match a specific set of prestored biometric features.

In connection with adjusting to acceptance tolerance AT_ver, the user device S is configured that the person can request receiving an encrypted code containing her anonymous identifier PF _ID from an application server PS, AMS, and to transmit from the user device S the anonymous identifier PF_ID to the respective biometric sensor b1, b2, ..., bn for further transmission to the matching server MS for the purpose of verification of biometric features belonging to the anonymous identifier PF _ID.

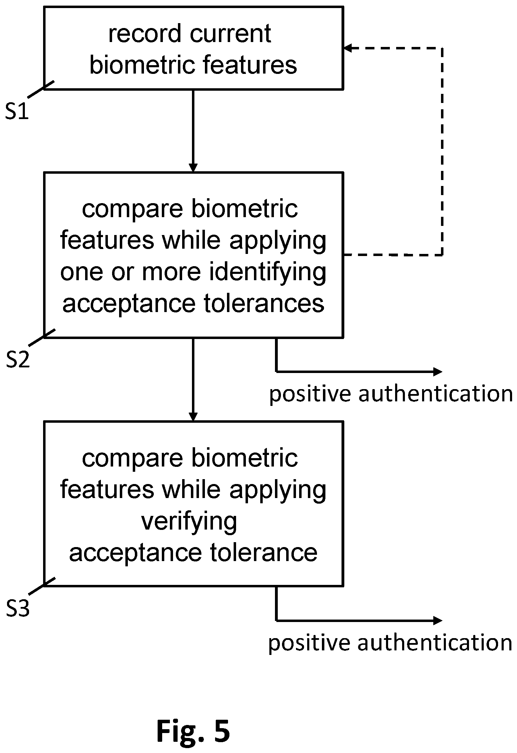

Figure 5 illustrates schematically possible steps of a method in accordance with the present invention. In step S1, at a biometric sensor b1, b2, ..., bn, current biometric features of the person P are recorded, for example biometric features of one hand of the person P. In step S2, the currently recorded biometric features of the person are compared with biometric features of enrolled persons while applying one or more identifying acceptance tolerances AT_ident_one, AT_ident_two. As illustrated in Figure 5, the method may step back to step S1 for recording further biometric features, for example biometric features of the other hand of the person P. As illustrated in Figure 5, in case of a match in step S2, positive authentication is signalled. In case of no positive authentication, in step S3 biometric features are compared with prestored biometric features of the person P while applying a verification acceptance tolerance AT_ver, wherein for example the user device S enables selecting prestored biometric features of the person P.

### Reference Signs

b1, b2, ..., bn biometric sensors
RT_ID identifier of respective biometric sensor
MS matching sever
AT acceptance tolerance
AT_ident_one, AT_ident_two identifying acceptance tolerances
AT_ver verifying acceptance tolerance
PS payment server
c1, c2, ..., cn cash desks
CDS cash desk server
AMS access management server
d1, d2, ..., dn door lockers
P person
S user device of the person
APPL_ID unique identifier of personal data of the person
PF_ID anonymous identifier of the person

## Claims

1. A method comprising:
at a biometric sensor (b1, b2, ..., bn), recording current biometric features of a person (P),
at a matching server (MS), comparing currently recorded biometric features of the person (P) with prestored biometric features of enrolled persons while applying one or more identifying acceptance tolerances, and signalling positive authentication in case of a match,
**characterized in that**
at a user device (S) of the person (P), in case of no positive authentication at the matching server (MS), sending an anonymous identifier of the person (P) via a communication link between the user device (S) and the respective biometric sensor (b1, b2, ..., bn) to the matching server (MS) for the purpose of selecting prestored biometric features of the person (P);
at the matching server (MS), selecting prestored biometric features of the person (P) and comparing the currently recorded biometric features of the person (P) with selected prestored biometric features of the person (P) while applying a verifying acceptance tolerance, and signalling positive authentication in case of successful verification.

2. The method according to claim 1, further comprising: at the user device (S), receiving an anonymous identifier of the person from an application server (PS; AMS) for the purpose of enabling selecting prestored biometric features of the person (P) at the matching server (MS).

3. The method according to one of claims 1 to 2, further comprising: at the user device (S), transmitting an anonymous identifier of the person (P) from the user device (S) to the respective biometric sensor (b1, b2, ..., bn) by displaying at the user device (S) a visual code, in particular a QR code, on a display of the user device (S), and by reading the visual code at the respective biometric sensor (b1, b2, ..., bn), or by transmitting the anonymous identifier via a near field communication link (NFC link) between the user device (S) and the respective biometric sensor (b1, b2, ..., bn).

4. The method according to one of claims 1 to 3, further comprising: at the user device (S), receiving and transmitting an anonymous identifier in encrypted form for the purpose of enabling selecting prestored biometric features of the person (P) at the matching server (MS).

5. The method according to one of claims 1 to 4, further comprising: limiting the biometric sensor (b1, b2, ..., bn) for recording biometric features of one or two hands of the person (P), and in particular using an image sensor with band-pass filters in the 470±25nm and 850±25nm areas; an LED illumination unit with independently controllable illumination duration for the 470±25nm and 850±25nm areas; a time of flight sensor with a Quarter-VGA (QVGA) voxel resolution or higher.

6. The method according to one of claims 1 to 5, further comprising: at a biometric sensor (b1, b2, ..., bn), detecting whether a body part of the person (P) or the user device (S) of the person (P) is approaching, and selecting reading biometric features of the body part of the person (P) respectively reading a visual code displayed on a display of the user device (S), or enabling a near field communication link (NFC link) between the user device (S) and the biometric sensor (b1, b2, ..., bn).

7. The method according to one of claims 1 to 6, further comprising: at one or more of the biometric sensor (b1, b2, ..., bn), the matching server (MS), and the user device (S), enabling encryption of data communications.

8. The method according to one of claims 1 to 7, further comprising: enabling contactless communication between the biometric sensor (b1, b2, ..., bn) and the user device (S).

9. The method according to one of claims 1 to 8, further comprising: at the matching server (MS), performing authentication of the person (P) at a parametrizable security level in the form of a multi-stage process in cooperation with the respective biometric sensor (b1, b2, ..., bn) and the user device (S).

10. The method according to one of claims 1 to 9, further comprising: at the matching server (MS), applying a first acceptance tolerances relating to biometric features of a first body part of the person (P), and applying a second acceptance tolerance relating to biometric features of the first body part and a second body part of the person (P).

11. The method according to one of claims 1 to 10, further comprising: initiating recording of current biometric features at a biometric sensor (b1, b2, ..., bn) upon approach of the person (P) to the biometric sensor (b1, b2, ..., bn), or initiating recording of current biometric features at an application server (PS) upon receipt of respective information.

12. The method according to one of claims 1 to 10, further comprising: limiting the matching server (S) to the purpose of authentication, and limiting an application server (PS, AMS) to the purpose of one or more of payment control, and access control.

13. A system comprising:
one or more biometric sensors (b1, b2, ..., bn) for recording current biometric features of a person (P),
a matching server (MS) for comparing currently recorded biometric features of the person (P) with prestored biometric features of enrolled persons while applying one or more identifying acceptance tolerances, and signalling positive authentication in case of a match,
**characterized in that**
the system further comprises a user device (S) of the person (P) adapted to, in case of no positive authentication, send an anonymous identifier of the person (P) via a communication link between the user device (S) and the respective biometric sensor (b1, b2, ..., bn) to the matching server (MS) for the purpose of selecting prestored biometric features of the person (P),
the matching server (MS) is further adapted to select pre-stored biometric features of the person (P), compare the currently recorded biometric features of the person (P) with selected prestored biometric features of the person (P) while applying a verifying acceptance tolerance, and signal positive authentication in case of successful verification.

14. The system according to claim 13, further comprising: an application server (PS, AMS) for enabling application functions, in particular for enabling one or more of payment control, and access control.

## Patentansprüche

1. Verfahren, umfassend:
an einem biometrischen Sensor (b1, b2, ..., bn), Aufzeichnen von aktuellen biometrischen Merkmalen einer Person (P),
an einem Abgleichserver (MS), Vergleichen der derzeit aufgezeichneten biometrischen Merkmale der Person (P) mit im Voraus gespeicherten biometrischen Merkmalen angemeldeter Personen, während eine oder mehrere Identifizierungsakzeptanztoleranzen angewendet werden, und Signalisieren einer positiven Authentifizierung im Fall einer Übereinstimmung,
**gekennzeichnet durch**
an einer Benutzervorrichtung (S) der Person (P), falls keine positive Authentifizierung an dem Abgleichserver (MS) vorliegt, Senden einer anonymen Kennung der Person (P) über eine Kommunikationsverbindung zwischen der Benutzervorrichtung (S) und dem jeweiligen biometrischen Sensor (b1, b2, ..., bn) an den Abgleichserver (MS) zum Zweck des Auswählens von im Voraus gespeicherten biometrischen Merkmalen der Person (P);
an dem Abgleichserver (MS), Auswählen von im Voraus gespeicherten biometrischen Merkmalen der Person (P) und Vergleichen der derzeit aufgezeichneten biometrischen Merkmale der Person (P) mit ausgewählten im Voraus gespeicherten biometrischen Merkmalen der Person (P), während eine Verifizierungsakzeptanztoleranz angewendet wird, und Signalisieren einer positiven Authentifizierung im Fall einer erfolgreichen Verifizierung.

2. Verfahren nach Anspruch 1, ferner umfassend: an der Benutzervorrichtung (S), Empfangen einer anonymen Kennung der Person von einem Anwendungsserver (PS; AMS) zum Zweck des Ermöglichens des Auswählens von im Voraus gespeicherten biometrischen Merkmalen der Person (P) an dem Abgleichserver (MS).

3. Verfahren nach einem der Ansprüche 1 bis 2, ferner umfassend: an der Benutzervorrichtung (S), Senden einer anonymen Kennung der Person (P) von der Benutzervorrichtung (S) an den jeweiligen biometrischen Sensor (b1, b2, ..., bn) durch Anzeigen an der Benutzervorrichtung (S) eines visuellen Codes, insbesondere eines QR-Codes, an einer Anzeige der Benutzervorrichtung (S), und durch Lesen des visuellen Codes an dem jeweiligen biometrischen Sensor (b1, b2, ..., bn), oder durch Senden der anonymen Kennung über eine Nahfeld-Kommunikationsverbindung (NFC-Verbindung) zwischen der Benutzervorrichtung (S) und dem jeweiligen biometrischen Sensor (b1, b2, ..., bn).

4. Verfahren nach einem der Ansprüche 1 bis 3, ferner umfassend: an der Benutzervorrichtung (S), Empfangen und Senden einer anonymen Kennung in verschlüsselter Form zum Zweck des Ermöglichens des Auswählens von im Voraus gespeicherten biometrischen Merkmalen der Person (P) an dem Abgleichserver (MS).

5. Verfahren nach einem der Ansprüche 1 bis 4, ferner umfassend: Einschränken des biometrischen Sensors (b1, b2, ..., bn) auf das Aufzeichnen von biometrischen Merkmalen einer oder der beiden Hände der Person (P), und insbesondere auf das Verwenden eines Bildsensors mit Bandpassfiltern in den Bereichen von 470 ±25 nm und 850 ±25 nm; eine LED-Beleuchtungseinheit mit unabhängig steuerbarer Beleuchtungsdauer für die Bereiche von 470 ±25 nm und 850 ±25 nm; einen Laufzeitsensor mit einer Viertel-VGA- (QVGA) Voxel-Auflösung oder höher.

6. Verfahren nach einem der Ansprüche 1 bis 5, ferner umfassend: an einem biometrischen Sensor (b1, b2, ..., bn), Detektieren, ob sich ein Körperteil der Person (P) oder die Benutzervorrichtung (S) der Person (P) nähert, und Auswählen des Lesens von biometrischen Merkmalen des Körperteils der Person (P) bzw. des Lesens eines visuellen Codes, der an einer Anzeige der Benutzervorrichtung (S) angezeigt wird, oder des Ermöglichens einer Nahfeld-Kommunikationsverbindung (NFC-Verbindung) zwischen der Benutzervorrichtung (S) und dem biometrischen Sensor (b1, b2, ..., bn).

7. Verfahren nach einem der Ansprüche 1 bis 6, ferner umfassend: an einem oder mehreren von dem biometrischen Sensoren (b1, b2, ..., bn), dem Abgleichserver (MS) und der Benutzervorrichtung (S), Ermöglichen einer Verschlüsselung von Datenkommunikationen.

8. Verfahren nach einem der Ansprüche 1 bis 7, ferner umfassend: Ermöglichen einer kontaktlosen Kommunikation zwischen dem biometrischen Sensor (b1, b2, ..., bn) und der Benutzervorrichtung (S).

9. Verfahren nach einem der Ansprüche 1 bis 8, ferner umfassend: an dem Abgleichserver (MS), Ausführen einer Authentifizierung der Person (P) auf einem parametrisierbaren Sicherheitsniveau in Form eines mehrstufigen Prozesses in Zusammenarbeit mit dem jeweiligen biometrischen Sensor (b1, b2, ..., bn) und der Benutzervorrichtung (S).

10. Verfahren nach einem der Ansprüche 1 bis 9, ferner umfassend: an dem Abgleichserver (MS), Anwenden einer ersten Akzeptanztoleranz bezüglich der biometrischen Merkmale eines ersten Körperteils der Person (P), und Anwenden einer zweiten Akzeptanztoleranz bezüglich der biometrischen Merkmale des ersten Körperteils und eines zweiten Körperteils der Person (P).

11. Verfahren nach einem der Ansprüche 1 bis 10, ferner umfassend: Einleiten des Aufzeichnens von aktuellen biometrischen Merkmalen an einem biometrischen Sensor (b1, b2, ..., bn) bei Annäherung der Person (P) an den biometrischen Sensor (b1, b2, ..., bn), oder Einleiten des Aufzeichnens von aktuellen biometrischen Merkmalen an einem Anwendungsserver (PS) bei Empfang entsprechender Informationen.

12. Verfahren nach einem der Ansprüche 1 bis 10, ferner umfassend: Einschränken des Abgleichservers (S) auf den Zweck des Authentifizierens, und Einschränken eines Anwendungsservers (PS, AMS) auf den Zweck von einer oder mehreren von Zahlungskontrolle und Zugangskontrolle.

13. System, umfassend:
einen oder mehrere biometrische Sensoren (b1, b2, ..., bn) zum Aufzeichnen von aktuellen biometrischen Merkmalen einer Person (P),
einen Abgleichserver (MS) zum Vergleichen von derzeit aufgezeichneten biometrischen Merkmalen der Person (P) mit im Voraus gespeicherten biometrischen Merkmalen von angemeldeten Personen, während eine oder mehrere Identifizierungsakzeptanztoleranzen angewendet werden, und Signalisieren einer positiven Authentifizierung im Fall einer Übereinstimmung,
**dadurch gekennzeichnet, dass**
das System ferner eine Benutzervorrichtung (S) der Person (P) umfasst, die dazu geeignet ist, für den Fall, dass keine positive Authentifizierung vorliegt, eine anonyme Kennung der Person (P) über eine Kommunikationsverbindung zwischen der Benutzervorrichtung (S) und dem jeweiligen biometrischen Sensor (b1, b2, ..., bn) an den Abgleichserver (MS) zum Zweck des Auswählens von im Voraus gespeicherten biometrischen Merkmalen der Person (P) zu senden,
der Abgleichserver (MS) ferner dazu geeignet ist, im Voraus gespeicherte biometrische Merkmale der Person (P) auszuwählen, die derzeit aufgezeichneten biometrischen Merkmale der Person (P) mit ausgewählten, im Voraus gespeicherten biometrischen Merkmalen der Person (P) zu vergleichen, während eine Verifizierungsakzeptanztoleranz angewendet wird, und eine positive Authentifizierung für den Fall einer erfolgreichen Verifizierung zu signalisieren.

14. System nach Anspruch 13, ferner umfassend: einen Anwendungsserver (PS, AMS) zum Ermöglichen von Anwendungsfunktionen, insbesondere zum Ermöglichen einer oder mehrerer von Zahlungskontrolle und Zugangskontrolle.

## Revendications

1. Procédé comprenant :
sur un capteur biométrique (b1, b2, ..., bn), l'enregistrement de caractéristiques biométriques actuelles d'une personne (P),
sur un serveur de mise en correspondance (MS), la comparaison de caractéristiques biométriques actuellement enregistrées de la personne (P) à des caractéristiques biométriques préenregistrées de personnes inscrites tout en appliquant une ou plusieurs tolérances d'acceptation d'identification, et la signalisation d'une authentification positive en cas de correspondance,
**caractérisé par**
sur un dispositif utilisateur (S) de la personne (P), en cas d'absence d'authentification positive sur le serveur de mise en correspondance (MS), l'envoi d'un identifiant anonyme de la personne (P) via un lien de communication entre le dispositif utilisateur (S) et le capteur biométrique respectif (b1, b2, ..., bn) au serveur de mise en correspondance (MS) afin de sélectionner des caractéristiques biométriques préenregistrées de la personne (P) ;
sur le serveur de mise en correspondance (MS), la sélection de caractéristiques biométriques préenregistrées de la personne (P) et la comparaison des caractéristiques biométriques actuellement enregistrées de la personne (P) à des caractéristiques biométriques préenregistrées sélectionnées de la personne (P) tout en appliquant une tolérance d'acceptation de vérification, et la signalisation d'une authentification positive en cas de vérification réussie.

2. Procédé selon la revendication 1, comprenant en outre : sur le dispositif utilisateur (S), la réception d'un identifiant anonyme de la personne provenant d'un serveur d'applications (PS ; AMS) afin d'habiliter la sélection de caractéristiques biométriques préenregistrées de la personne (P) sur le serveur de mise en correspondance (MS).

3. Procédé selon l'une des revendications 1 et 2, comprenant en outre : sur le dispositif utilisateur (S), la transmission d'un identifiant anonyme de la personne (P) du dispositif utilisateur (S) au capteur biométrique respectif (b1, b2, ..., bn) par affichage sur l'appareil utilisateur (S) d'un code visuel, en particulier d'un code QR, sur un affichage du dispositif utilisateur (S), et par lecture du code visuel sur le capteur biométrique respectif (b1, b2, ..., bn), ou par transmission de l'identifiant anonyme via un lien de communication en champ proche (lien NFC) entre le dispositif utilisateur (S) et le capteur biométrique respectif (b1, b2, ..., bn) .

4. Procédé selon l'une des revendications 1 à 3, comprenant en outre : sur le dispositif utilisateur (S), la réception et la transmission d'un identifiant anonyme sous forme chiffrée afin d'habiliter la sélection de caractéristiques biométriques préenregistrées de la personne (P) sur le serveur de mise en correspondance (MS).

5. Procédé selon l'une des revendications 1 à 4, comprenant en outre : la limitation du capteur biométrique (b1, b2, ..., bn) pour l'enregistrement de caractéristiques biométriques d'une main ou des deux mains de la personne (P), et en particulier l'utilisation d'un capteur d'image avec filtres passe-bande dans les plages de 470 ± 25 nm et 850 ± 25 nm ; une unité d'éclairage DEL avec une durée d'éclairage contrôlable indépendamment pour les plages de 470 ± 25 nm et 850 ± 25 nm ; un capteur de temps de vol avec une définition de voxel supérieure ou égale à une définition QVGA.

6. Procédé selon l'une des revendications 1 à 5, comprenant en outre : sur un capteur biométrique (b1, b2, ..., bn), la détection du fait qu'une partie du corps de la personne (P) ou le dispositif utilisateur (S) de la personne (P) s'approche ou non, et la sélection de la lecture de caractéristiques biométriques de la partie du corps de la personne (P) en lisant respectivement un code visuel affiché sur un affichage du dispositif utilisateur (S), ou l'habilitation d'une liaison de communication en champ proche (liaison NFC) entre le dispositif utilisateur (S) et le capteur biométrique (b1, b2, ..., bn).

7. Procédé selon l'une des revendications 1 à 6, comprenant en outre : sur un ou plusieurs capteurs biométriques (b1, b2, ..., bn), l'habilitation du chiffrage de communications de données par le serveur de mise en correspondance (MS) et le dispositif utilisateur (S).

8. Procédé selon l'une des revendications 1 à 7, comprenant en outre : l'habilitation d'une communication sans contact entre le capteur biométrique (b1, b2, ..., bn) et le dispositif utilisateur (S).

9. Procédé selon l'une des revendications 1 à 8, comprenant en outre : sur le serveur de mise en correspondance (MS), la mise en œuvre d'une authentification de la personne (P) à un niveau de sécurité paramétrable sous la forme d'un processus à plusieurs étapes en coopération avec le capteur biométrique respectif (b1, b2, ..., bn) et le dispositif utilisateur (S).

10. Procédé selon l'une des revendications 1 à 9, comprenant en outre : sur le serveur de mise en correspondance (MS), l'application d'une première tolérance d'acceptation relative à des caractéristiques biométriques d'une première partie du corps de la personne (P), et l'application d'une deuxième tolérance d'acceptation relative à des caractéristiques biométriques de la première partie du corps et d'une deuxième partie du corps de la personne (P).

11. Procédé selon l'une des revendications 1 à 10, comprenant en outre : le lancement de l'enregistrement de caractéristiques biométriques actuelles sur un capteur biométrique (b1, b2, ..., bn) lorsque la personne (P) s'approche du capteur biométrique (b1, b2, ..., bn), ou le lancement de l'enregistrement de caractéristiques biométriques actuelles sur un serveur d'applications (PS) dès la réception d'informations respectives.

12. Procédé selon l'une des revendications 1 à 10, comprenant en outre : la limitation du serveur de mise en correspondance (S) à des fins d'authentification, et la limitation d'un serveur d'applications (PS, AMS) aux fins d'un ou plusieurs contrôles parmi un contrôle de paiement et un contrôle d'accès.

13. Système comprenant :
un ou plusieurs capteurs biométriques (b1, b2, ..., bn) pour enregistrer des caractéristiques biométriques actuelles d'une personne (P),
un serveur de mise en correspondance (MS) pour comparer des caractéristiques biométriques actuellement enregistrées de la personne (P) à des caractéristiques biométriques préenregistrées de personnes inscrites tout en appliquant une ou plusieurs tolérances d'acceptation d'identification, et la signalisation d'une authentification positive en cas de correspondance,
**caractérisé en ce que**
le système comprend en outre un dispositif utilisateur (S) de la personne (P) adapté pour, en cas d'absence d'authentification positive, envoyer un identifiant anonyme de la personne (P) via un lien de communication entre le dispositif utilisateur (S) et le capteur biométrique respectif (b1, b2, ..., bn) au serveur de mise en correspondance (MS) afin de sélectionner des caractéristiques biométriques préenregistrées de la personne (P),
le serveur de mise en correspondance (MS) est en outre adapté pour sélectionner des caractéristiques biométriques préenregistrées de la personne (P), pour comparer les caractéristiques biométriques actuellement enregistrées de la personne (P) à des caractéristiques biométriques préenregistrées sélectionnées de la personne (P) tout en appliquant une tolérance d'acceptation de vérification, et pour signaler une authentification positive en cas de vérification réussie.

14. Système selon la revendication 13, comprenant en outre : un serveur d'applications (PS, AMS) pour habiliter des fonctions d'application, en particulier pour habiliter un ou plusieurs contrôles parmi un contrôle de paiement et un contrôle d'accès.
